# EUROPEAN PATENT APPLICATION

(11) **EP 1 691 345 A1**
(43) Date of publication of application: **16.08.2006**
(21) Application number: 04820623.9
(22) Date of filing: 06.12.2004
(51) Int. Cl.: G10L 15/22, G06F 3/16, G10L 15/00, G10L 15/10, G10L 15/28

(54) **DEVICE CONTROL DEVICE, SPEECH RECOGNITION DEVICE, AGENT DEVICE, DATA STRUCTURE, AND DEVICE CONTROL METHOD**

(30) Priority: 05.12.2003 JP 2003406638; 05.12.2003 JP 2003406640; 05.12.2003 JP 2003406645; 05.12.2003 JP 2003406655; 05.12.2003 JP 2003406671
(71) Applicant: Kabushiki Kaisha Kenwood, Hachiouji-shi, Tokyo 192-8525 (JP)
(72) Inventor: SATO, Yasushi, Nagareyama-shi, Chiba 270-0163 (JP)
(74) Representative: Rüger, Barthelt & Abel Patentanwälte
(86) International application number: PCT/IB2004/004001
(87) International publication number: WO 2005/062294

(57) **Abstract**

A language analyzer (2) performs speech recognition on a speech input by a speech input unit (1), specifies a possible word which is represented by the speech, and the score thereof, and supplies word data representing them to an agent processing unit (6). The agent processing unit (6) stores process item data which defmes a data acquisition process to acquire word data or the like, a discrimination process, and an input/output process, and wires or data defining transition from one process to another and giving a transition constant to the transition, and executes a flow represented generally by the process item data and the wires to thereby control devices belonging to an input/output target device group (5). To which process in the flow the transition takes place is determined by the weighting factor of each wire, which is determined by the connection relationship between a point where the process has proceeded and the wire, and the score of word data.

## Description

### Technical Field

The present invention relates to a device control device, a speech recognition device, an agent device, a data structure, and a device control method.

### Background Art

Recently, a scheme of recognizing speeches using a speech recognition technology, and controlling electric devices or the like in response to the recognition result is used. Specifically, the scheme identifies a word represented by the input speech, discriminates whether the identified word matches a predetermined keyword or not, and controls an external device based on the discrimination result (see, for example, Patent Literature 1).
Patent Literature 1: Unexamined Japanese Patent Application KOKAI Publication No. H8-339288

### Disclosure of the Invention

### Problem to be Solved by the Invention

It is however difficult to completely recognize an instruction aurally uttered in the form of a language by a human being. Accordingly, there is a case where the scheme cannot adequately respond to an instruction uttered in the form of a language by a human being.

The present invention has been made in view of the above situation, and it is an object of the invention to provide a device control device, a speech recognition device, an agent device, a data structure, and a device control method, which can control a device adequately in response to an instruction uttered in the form of a language by a human being.

### Means for Solving the Problem

To achieve the object, a device control device according to the first aspect of the invention comprises:
input information recognition means (2) which recognizes input information to be input;
process-item data storing means (D4) which stores a plurality of process items for executing processes corresponding to recognition information recognized by the input information recognition means (2); and
transition-definition data storing means (D5) which stores plural pieces of transition definition data defining transition from one process item in the plurality of process items to another process item, wherein
each piece of the transition definition data includes a condition corresponding to input information, and
a piece of transition definition data is selected from at least the recognition information and the conditions of the individual transition definition data, and a status is transitioned to a process item designated by the selected transition definition data.

The recognized information may include a likelihood (score) between input information and information to be compared, and
the piece of transition definition data may be selected using the likelihood (score).

When a jump is made from a predetermined process item to a process item or transition definition data which is not defined by transition defining data, transition definition data corresponding to the process item or transition definition data jumped from the predetermined process item can be generated.

The input information may be a speech signal, and
the condition of the transition definition data may be a word associated with the transition definition data.

A plurality of conditions may be set for the transition definition data.

A device control device according to the second aspect of the invention is a device control device (6) that stores plural pieces of transition definition data which defines transition from one process item in process items for executing processes corresponding to input information to another process item, selects a piece of transition definition data in accordance with the input information, and transitions a status to a process item designated by the selected piece of transition definition data,
wherein the transition definition data includes:
a condition corresponding to the input information,
a weighting factor corresponding to the condition, and
constants each of which is a standard for calculating the weighting factor and set for the transition definition data, and
a weighting factor of transition definition data relating to another process item linked to one process item whose status is transitioned is calculated by accumulating the constants from the constant for transition definition data relating to one process item to the constant for transition definition data relating to the another process item.

A device control device according to the third aspect of the invention comprises:
input information recognition means (2) which recognizes input information to be input;
process-item data storing means (D4) which stores a plurality of process items for executing processes corresponding to recognized information recognized by the input information recognition means (2); and
transition-definition data storing means (D5) which stores plural pieces of transition definition data defining transition from one process item in the plurality of process items to another process item, wherein
each piece of the transition definition data includes a condition corresponding to input information and a weighting factor corresponding to the condition,
the recognized information includes a likelihood (score) indicating a status of matching between the input information and the condition of the transition definition data,
the weighing factor is associated with a likelihood (score) corresponding to the condition of the transition definition data to obtain a result of discrimination for the condition of each transition definition data, and
a piece of transition definition data is selected based on the discrimination result, and a status is transitioned to a process item designated by the selected transition definition data.

When a jump is made from a predetermined process item to a process item or transition definition data which is not defined by transition defining data, transition definition data corresponding to the process item or transition definition data jumped from the predetermined process item can be generated.

A transition constant which is a calculation standard for the weighting factor may be set as a constant corresponding to the transition definition data, and
a weighting factor of transition definition data relating to another process item linked to one process item whose status is transitioned may be calculated by accumulating the constants from the constant for transition definition data relating to one process item to the constant for transition definition data relating to the another process item.

The transition constant may change, provided that transition definition data relating to the transition constant is selected.

Even when a status is transitioned to one process item, a weighting factor of transition definition data relating to a predetermined process item may be set higher than a predetermined value.

The input information may be a speech signal, and
the condition of the transition definition data may be a word subject to speech recognition.

A plurality of conditions may be set for a piece of transition definition data.

A device control device according to the fourth aspect of the invention has process-item data storing means (D4) which stores a plurality of process items for executing processes corresponding to recognized information obtained by recognizing input information,
defines transition from one process item in the plurality of process items to another process item by transition definition data, and
generates a flowchart of process items by adding or deleting the transition definition data in accordance with a link to a necessary process item.

The process-item data storing means (D4) may be constituted in such a manner that a process item can be added adequately.

Each piece of the transition definition data may have a condition corresponding to input information.

The recognized information may have a likelihood (score) indicating a status of matching between input information and the condition of the transition definition data, and
the likelihood corresponding to the condition of the transition definition data may be set for the transition definition data.

The input information may be a speech signal,
the condition of the transition definition data may be a target word subject to speech recognition,
the recognized information may include a likelihood (score) indicating a status of matching between the speech signal and the target word of the transition definition data,
the likelihood (score) corresponding to the target word of the transition definition data may be set in the transition definition data, and
a piece of the transition definition data may be selected in accordance with the likelihood (score), and a state is transitioned to a process item represented by the selected piece of transition definition data.

The transition definition data may include
a condition corresponding to input information, and
a weighting factor corresponding to the condition.

A transition constant which is a calculation standard for the weighting factor may be set as a constant corresponding to the transition definition data, and
a weighting factor of transition definition data relating to another process item linked to one process item whose status is transitioned may be calculated by accumulating the constants from the constant for transition definition data relating to one process item to the constant for transition definition data relating to the another process item.

A speech recognition device according to the fifth aspect of the invention comprises:
input information recognition means (2) which recognizes input information to be input;
process-item data storing means (D4) which stores a plurality of process items for executing processes corresponding to recognition information recognized by the input information recognition means (2); and
transition-definition data storing means (D5) which stores plural pieces of transition definition data defining transition from one process item in the plurality of process items to another process item, wherein
each piece of the transition definition data includes a condition corresponding to input information, and
a piece of transition definition data is selected from at least the recognition information and the conditions of the individual transition definition data, and a status is transitioned to a process item designated by the selected transition definition data.

A speech recognition device according to the sixth aspect of the invention comprises a device control device (6) which stores plural pieces of transition definition data which defines transition from one process item in process items for executing processes corresponding to input information to another process item, selects a piece of transition definition data in accordance with the input information, and transitions a status to a process item designated by the selected piece of transition definition data,
wherein the transition definition data includes:
a condition corresponding to the input information,
a weighting factor corresponding to the condition, and
constants each of which is a standard for calculating the weighting factor and set for the transition definition data, and
a weighting factor of transition definition data relating to another process item linked to one process item whose status is transitioned is calculated by accumulating the constants from the constant for transition definition data relating to one process item to the constant for transition definition data relating to the another process item.

A speech recognition device according to the seventh aspect of the invention comprises:
input information recognition means (2) which recognizes input information to be input;
process-item data storing means (D4) which stores a plurality of process items for executing processes corresponding to recognized information recognized by the input information recognition means (2); and
transition-definition data storing means (D5) which stores plural pieces of transition definition data defining transition from one process item in the plurality of process items to another process item, wherein
each piece of the transition definition data includes a condition corresponding to input information and a weighting factor corresponding to the condition,
the recognized information includes a likelihood (score) indicating a status of matching between the input information and the condition of the transition definition data,
the weighing factor is associated with a likelihood (score) corresponding to the condition of the transition definition data to obtain a result of discrimination for the condition of each transition definition data, and
a piece of transition definition data is selected based on the discrimination result, and a status is transitioned to a process item designated by the selected transition definition data.

A speech recognition device according to the eighth aspect of the invention has process-item data storing means (D4) which stores a plurality of process items for executing processes corresponding to recognized information obtained by recognizing input information,
defines transition from one process item in the plurality of process items to another process item by transition definition data, and
generates a flowchart of process items by adding or deleting the transition definition data in accordance with a link to a necessary process item.

An agent device according to the ninth aspect of the invention comprises:
input information recognition means (2) which recognizes input information to be input;
process-item data storing means (D4) which stores a plurality of process items for executing processes corresponding to recognition information recognized by the input information recognition means (2); and
transition-definition data storing means (D5) which stores plural pieces of transition definition data defining transition from one process item in the plurality of process items to another process item, wherein
each piece of the transition definition data includes a condition corresponding to input information, and
a piece of transition definition data is selected from at least the recognition information and the conditions of the individual transition definition data, and a status is transitioned to a process item designated by the selected transition definition data.

An agent device according to the tenth aspect of the invention comprises a device control device (6) which stores plural pieces of transition definition data which defines transition from one process item in process items for executing processes corresponding to input information to another process item, selects a piece of transition definition data in accordance with the input information, and transitions a status to a process item designated by the selected piece of transition definition data,
wherein the transition definition data includes:
a condition corresponding to the input information,
a weighting factor corresponding to the condition, and
constants each of which is a standard for calculating the weighting factor and set for the transition definition data, and
a weighting factor of transition definition data relating to another process item linked to one process item whose status is transitioned is calculated by accumulating the constants from the constant for transition definition data relating to one process item to the constant for transition definition data relating to the another process item.

An agent device according to the eleventh aspect of the invention comprises:
input information recognition means (2) which recognizes input information to be input;
process-item data storing means (D4) which stores a plurality of process items for executing processes corresponding to recognized information recognized by the input information recognition means (2); and
transition-definition data storing means (D5) which stores plural pieces of transition definition data defining transition from one process item in the plurality of process items to another process item, wherein
each piece of the transition definition data includes a condition corresponding to input information and a weighting factor corresponding to the condition,
the recognized information includes a likelihood (score) indicating a status of matching between the input information and the condition of the transition definition data,
the weighing factor is associated with a likelihood (score) corresponding to the condition of the transition definition data to obtain a result of discrimination for the condition of each transition definition data, and
a piece of transition definition data is selected based on the discrimination result, and a status is transitioned to a process item designated by the selected transition definition data.

An agent device according to the twelfth aspect of the invention has process-item data storing means (D4) which stores a plurality of process items for executing processes corresponding to recognized information obtained by recognizing input information,
defines transition from one process item in the plurality of process items to another process item by transition definition data, and
generates a flowchart of process items by adding or deleting the transition definition data in accordance with a link to a necessary process item.

A data structure according to the thirteenth aspect of the invention is a data structure of transition definition data which defines transition from one process item of a plurality of process items, for executing processes corresponding to input information, to another process item, wherein
the transition definition data includes
a condition corresponding to input information, and
a weighting factor corresponding to the condition,
a transition constant which is a calculation standard for the weighting factor is set as a constant corresponding to the transition definition data, and
a weighting factor of transition definition data relating to another process item linked to one process item whose status is transitioned is calculated by accumulating the constants from the constant for transition definition data relating to one process item to the constant for transition definition data relating to the another process item.

The input information may be a speech signal, and
the condition corresponding to the input information may be a target word for voice recognition.

A device control method according to the fourteenth aspect of the invention is a device control method of a device (6) which stores a plurality of process items for executing processes corresponding to recognized information recognized by input information recognition means (2), and stores plural pieces of transition definition data defining transition from one process item in the plurality of process items to another process item, comprising:
an input information recognition step of recognizing input information to be input;
a step of selecting a piece of transition definition data from at least recognized information recognized at the input information recognition step, and a condition set in accordance with the transition definition step; and
a step of transitioning a status to a process item designated by the selected transition definition data.

A device control method according to the fifteenth aspect of the invention comprises:
an input information recognition step of recognizing input information to be input;
a step of specifying a likelihood (score), which indicates a status of matching between a condition associated with transition definition data defining transition from one process item in a plurality of process items to another process item and the input information, from recognized information recognized at the input information recognition step;
a step of obtaining a discrimination result by relating a weighting factor associated with the transition definition data to the likelihood (score);
a step of selecting a piece of transition definition data based on the discrimination result; and
a step of transitioning a status to a process item designated by the selected transition definition data.

A device control method according to the sixteenth aspect of the invention comprises:
process-item data storing step of storing a plurality of process items for executing processes corresponding to input information;
a step of defining transition from one process item in a plurality of process items to another process item by transition definition data, and generating a flowchart of process items by adding or deleting the transition process data in accordance with a link of a necessary process item.

### Effect of the Invention

The present invention realizes a device control device, a speech recognition device, an agent device, a data structure, and a device control method which can control a device adequately in response to an instruction uttered in the form of a language by a human being.

### Brief Description of Drawings

[FIG. 1] A diagram showing a vehicular air conditioning system according to an embodiment of the present invention.
[FIG. 2] A more detailed structural diagram of the vehicular air conditioning system according to the embodiment.
[FIG. 3] A diagram exemplarily showing a specific example of grouping flags.
[FIG. 4] A diagram for explaining a trigger acquisition process.
[FIG. 5] A diagram for explaining a discrimination process.
[FIG. 6] A diagram for explaining a discrimination process with an inquiry.
[FIG. 7] A diagram for explaining an input/output process.
[FIG. 8] A diagram showing wires.
[FIG. 9] A diagram showing a flow represented generally by a process item database and a wire database.
[FIG. 10] A diagram for explaining setting of a weighting factor.
[FIG. 11] A flowchart for explaining the operation of an agent processing unit.

### Description of Reference Numerals

1 speech input unit
2 language analyzer
3 speech synthesis processing unit
4 speech output unit
5 input/output target device group
51 air conditioner
52 window opening/closing controller
6 agent processing unit

### Best Mode for Carrying Out the Invention

An embodiment of the present invention will be explained below, taking a vehicular air conditioning system provided in a vehicle as an example, by referring to the accompanying drawings. According to the invention, the vehicular air conditioning system can function as an agent device which transitions a status in accordance with input information, and carries out a process. A part of the vehicular air conditioning system function as a speech recognition device.

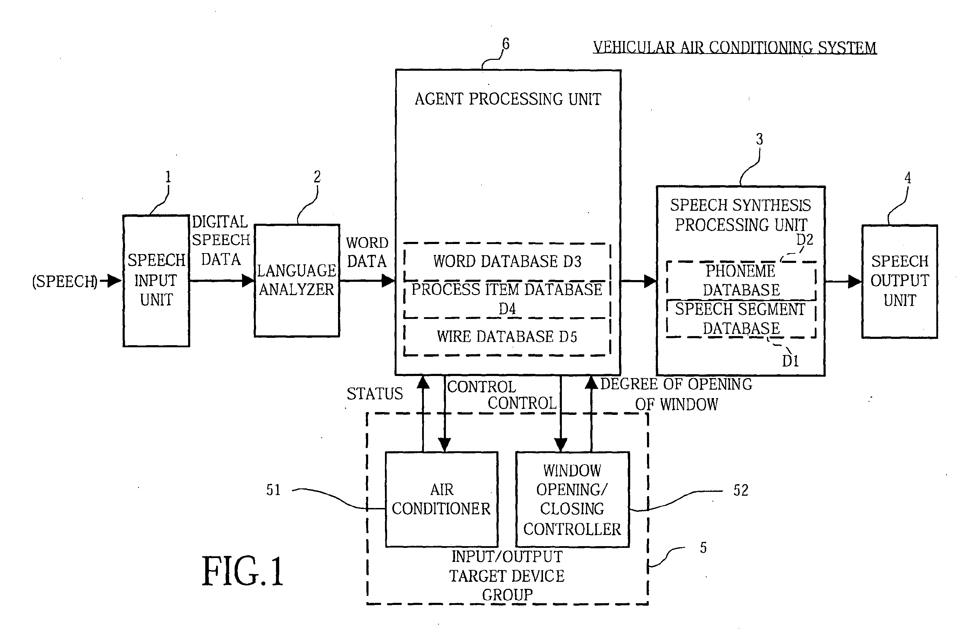

FIG. 1 is a block diagram showing the structure of the vehicular air conditioning system. As shown in the figure, the vehicular air conditioning system comprises a speech input unit 1, a language analyzer 2, a speech synthesis processing unit 3, a speech output unit 4, an input/output target device group 5, and an agent processing unit 6.

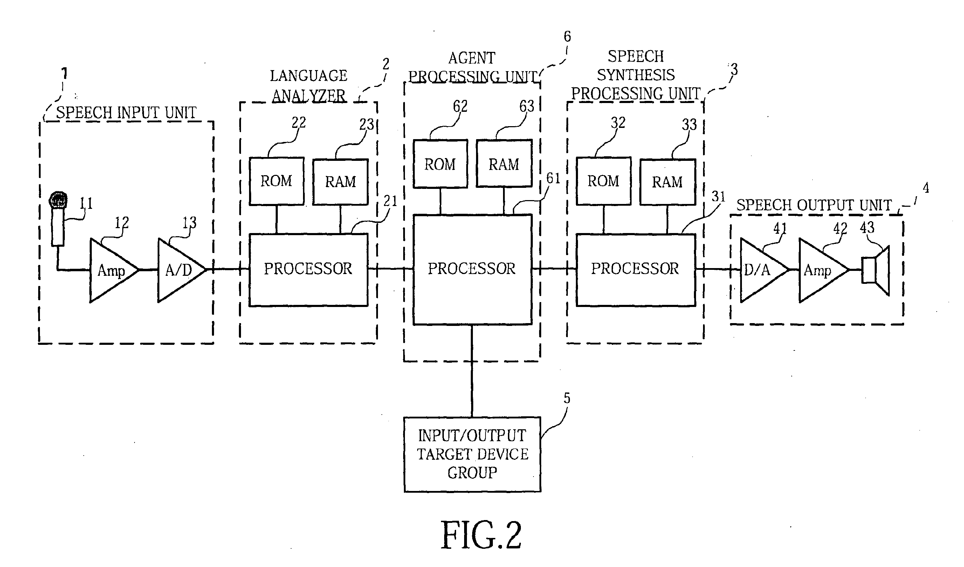

The speech input unit 1 inputs a speech, generates speech data of a digital form from the input speech, and supplies the speech data to the language analyzer 2. Specifically, the speech input unit 1 comprises, for example, a microphone 11, an AF (Audio Frequency) amplifier 12, and an A/D (Analog-to-Digital) converter 13 incorporating a sample and hold circuit as shown in FIG. 2. The microphone 11 converts a speech to a speech signal, and outputs the signal. The AF amplifier 12 amplifies the speech signal from the microphone 11, and outputs the signal. The A/D converter 13 performs sampling and A/D conversion of the amplified speech signal from the AF amplifier 12, generates digital speech data, and supplies the data to the language analyzer 2.

As shown in FIG. 2, each of the language analyzer 2, the speech synthesis processing unit 3 and the agent processing unit 6 comprises a processor 21, 31, 61 comprising, for example, a CPU (Central Processing Unit), a non-volatile memory 22, 32, 62, such as a hard disk drive, which stores a program to be run by the processor 21, 31, 61, and a volatile memory 23, 33, 63, such as a RAM (Random Access Memory), which has a memory area to be a work area for the processor.
A part or all of the functions of the language analyzer 2, the speech synthesis processing unit 3, and the agent processing unit 6 may be achieved by a single processor, or a single non-volatile memory and a single volatile memory.

The language analyzer 2 performs a speech recognition process on speech data supplied from the speech input unit 1.
Through the speech recognition process, the language analyzer 2 specifies a candidate for a word represented by the speech data, and the likelihood (score) S of the candidate. A word whose score S has a lower value than a predetermined value is not selected as a candidate. The scheme for speech recognition is arbitrary, and a plurality of candidates may be specified. Data indicating a specified candidate and the score S of the candidate (hereinafter, called word data) is generated, and supplied to the agent processing unit 6. The word data may include word information itself and a score S, but in practice, there is an advantage of dealing the word data if the word data includes a word ID and a score S

The non-volatile memory 32 of the speech synthesis processing unit 3 stores a speech segment database D1 which stores data representing waveforms of words, and a phoneme database D2 which stores data representing waveforms constituting phonemes.
The speech segment database D1 stores data representing waveforms of words. The phoneme database D2 stores data representing waveforms constituting phonemes. The speech synthesis processing unit 3 generates digital speech data representing a speech reading out text data supplied from the agent processing unit 6 by using the data stored in the speech segment database D1 and/or the phoneme database D2.
The speech synthesis processing unit 3 supplies the generated speech data to the speech output unit 4.
The scheme of generating digital speech data is arbitrary; for example, slot filling method and rule-based synthesis (Rule-based synthesis) can be used. The slot filling method is a method by which, for example, word-by-word speeches are read by an announcer, and are linked together and output. The rule-based synthesis is a method by which relatively small units, such as phonemes (consonants or vowels) or kana, are linked together and output.

The speech output unit 4 reproduces a speech represented by digital speech data supplied from the speech synthesis processing unit 3. More specifically, the speech output unit 4 has a D/A (Digital-to-Analog) converter 41, an AF amplifier 42, and a speaker 43 as shown in FIG. 2.
The D/A converter 41 performs D/A conversion on digital speech data supplied from the speech synthesis processing unit 3 to convert the data to an analog speech signal. The AF amplifier 42 amplifies the analog speech signal. The speaker 43 vibrates in accordance with the analog speech signal, and reproduces and outputs a speech represented by the analog speech data.

The input/output target device group 5 comprises, for example, an air conditioner 51, and a window opening/closing controller 52.

The air conditioner 51 performs a cooling, a heating or a fanning operation in accordance with a control signal supplied to the air conditioner. The air conditioner 51 generates and outputs data representing its operational status, e.g., data indicating in which one of statuses, a cooling operation, a heating operation, temperature adjustment to a set temperature, a fanning operation, and at rest, the air conditioner is. The air conditioner 51 generates and outputs data representing a setting status, e.g., data indicating a current set temperature.

The window opening/closing controller 52 includes a motor, a control circuit that controls rotation and stopping of the motor according to a control signal, and a winch that moves a window opening/closing control frame, and opens or closes a window according to a control signal supplied to that controller. The control circuit of the window opening/closing controller 52 generates and outputs data representing an operational status of the window opening/closing controller 52, e.g., data indicating the opened amount of the window to be opened/closed.

The non-volatile memory 62 of the agent processing unit 6 stores a word database D3. The word database D3 stores data of a plurality of words and one or more flags for word grouping indicating a plurality of word groupings in association with one another.

Individual flags associated with a single word are associated with concepts different from one another. When a flag represents a predetermined value (hereinafter, let the value be "1"), it indicates that a word associated with the flag is grouped under a concept associated with the flag. When the flag represents another value (for example, "0"), it indicates that the word is not grouped under the concept.

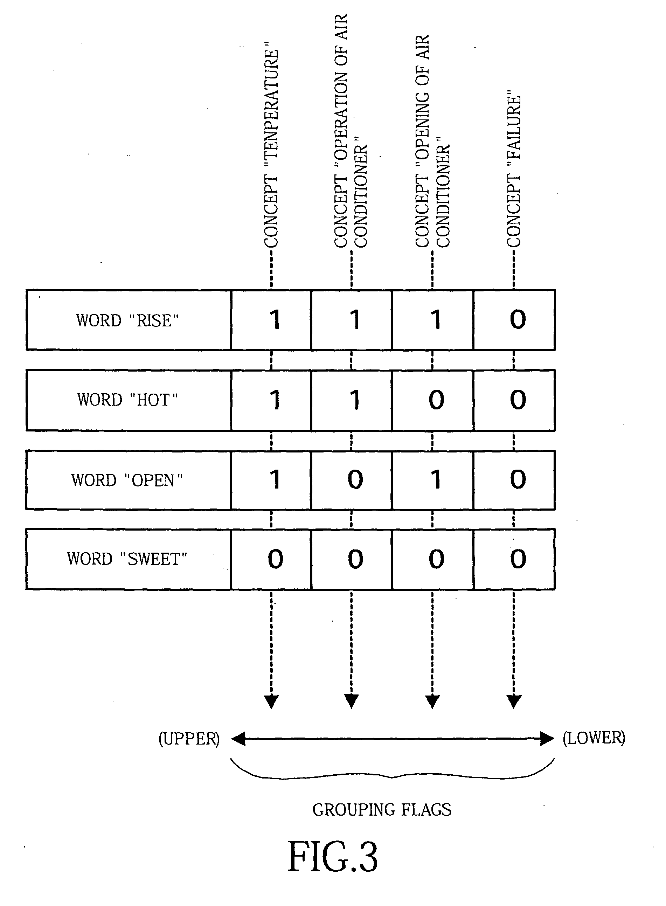

FIG. 3 is a diagram exemplarily showing a specific example of grouping flags.
In the example of FIG. 3, word grouping flags of four bits are associated with each of words "rise", "hot" and "open".
The most significant bit (MSB) flag in the 4-bit bit group is associated with a concept "temperature". The second bit flag from the MSB is associated with a concept "operation of air conditioner". The third bit flag from the MSB is associated with a concept "opening/closing of window". The least significant bit flag is associated with a concept "failure". As illustrated, the value of the 4-bit flags associated with the word "rise" is a binary number "1110", the value of the flags associated with the word "hot" is a binary number "1100", and the value of the flags associated with the word "open" is a binary number "1010". In this case, the flags indicate that the words "rise", "hot" and "open" are grouped under the concept "temperature", the words "rise" and "hot" are grouped under the concept "operation of air conditioner", the words "hot" and "open" are grouped under the concept "opening/closing of window", and none of the words "rise", "hot" and "open" are grouped under the concept "failure". Of course, increasing the number of bits can indicate the association with a greater number of concepts.
The individual words and the individual concepts are used as "discrimination targets" for individual process items stored in a process item database D4.

The non-volatile memory of the agent processing unit 6 further stores the process item database D4 and a wire database D5.

The process item database D4 is a database storing data (process item data) which describes the contents of a trigger acquisition process (TGxx), a discrimination process (Cnxx or QBxx), and an input/output process (EXxx to be discussed later), which are to be executed by the agent processing unit 6, process item (pointer) by process item. Note that "xx" is an identification number.

Of the process items stored in the process item database D4, data describing the contents of the "trigger acquisition process (TGxx)" includes trigger data (data designating the contents of data to be acquired as a trigger) which specifies a trigger to start those processes and a transition constant, to be discussed later, for determining the progress direction (a constant which indicates the degree of transition in the progress direction and becomes a calculation standard for a weighting factor J to be described later).
Trigger data is arbitrary, and is, for example, data indicating in which one of the statuses, a cooling operation, a heating operation, temperature adjustment to a set temperature, a fanning operation, and at rest, the air conditioner is, data indicating the amount of a window open, data indicating the temperature in a room, or the aforementioned word data supplied from the language analyzer 2. Alternatively, trigger data may be data which is given from the process the agent processing unit 6 itself executes. When trigger data(data which is acquired in the trigger acquisition process) is word data, it may be data indicating the "concept" that is assigned to the group to which a word represented by the word data belongs. It is to be noted that, as will be discussed later, the contents of the trigger acquisition process are described in such a way that a plurality of trigger acquisition processes do not acquire word data representing the same word.

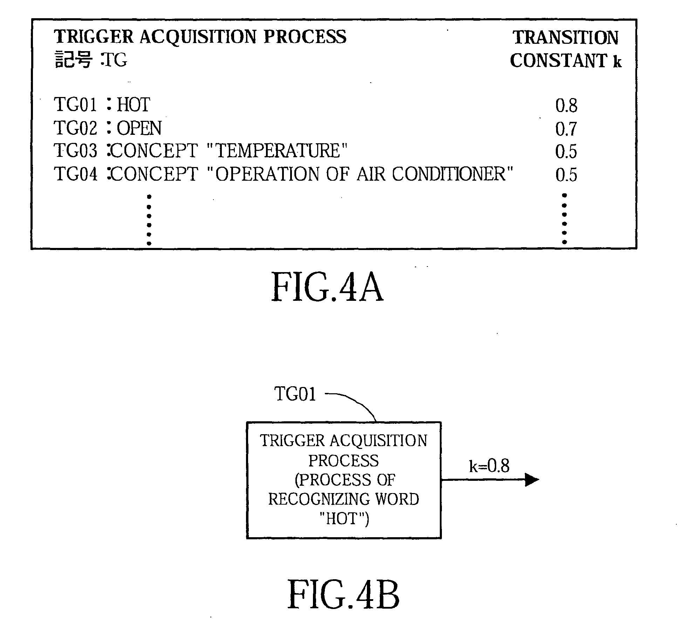

FIG 4A shows an example of a trigger acquisition process TGxx. In this example, a trigger TG01 is a process of acquiring the concept "hot" as a trigger (identifying the word (in the example in FIG. 3, word "temperature" or "operation of air conditioner") grouped to the word "hot"), and the transition constant k for determining whether or not to proceed (transition) to a process following that process is 0.8. FIG. 4B illustrates a flowchart for a trigger acquisition process TG01.
A trigger acquisition process TG02 is a process of acquiring the word "open". A trigger acquisition process TG03 is a process of acquiring a word belonging to a group associated with the concept "temperature" (acquiring one of "rise", "hot" and "open" in FIG. 3). TG04 is a process of acquiring a word belonging to a group associated with the concept "operation of air conditioner" (acquiring either "rise" or "hot" in FIG. 3).

Data describing the contents of a "discrimination process (Cnxx)" stored in the process item database D4 includes data describing a discrimination condition, a list of possible results as discrimination results, and a transition constant k in a return direction to be discussed later for each discrimination process. The data describing the contents of the discrimination processes includes data which describes a transition constant k for determining the progress direction for each discrimination result.

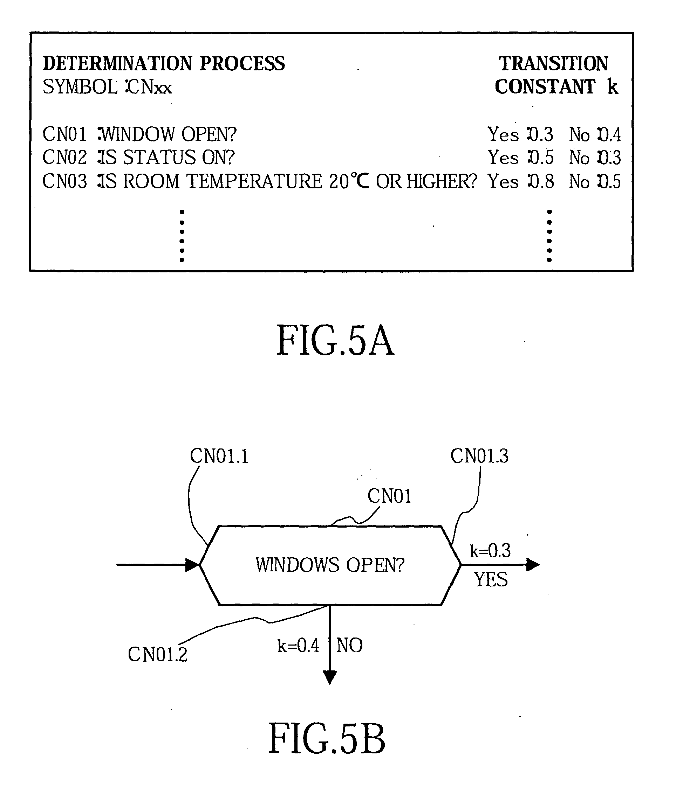

FIG. 5A shows an example of a discrimination process CNxx. In this example, a discrimination process CN01 is a "process of discriminating whether a window is open or not", and the transition constant k for determining whether or not to proceed to a following process when it is discriminated as open is 0.3, while the transition constant k for determining whether or not to proceed to a following process when it is not discriminated as open is 0.4. FIG 5B illustrates a flowchart for this example. A node CN01.1 shown in FIG. 5B is a start node indicating the start point of the process, a node CN01.2 is a node in the progress direction when it is discriminated that a window is closed, and the transition constant k is 0.4. Further, a node CN01.3 is a node in the progress direction when it is discriminated that a window is open, and the transition constant k is 0.3. A discrimination process CN02 is a process of discriminating whether the status of the air conditioner 51 is on (in operation) or not, and the transition constant k for determining whether or not to proceed to a following process when it is discriminated as being in operation is 0.5, while the transition constant k when it is not discriminated as being off (not operating) is 0.3.

In the "discrimination process", data to be used in discrimination may be acquired from an arbitrary acquisition source. Possible acquisition sources include, for example, other processes to be executed by the language analyzer 2 and the agent processing unit 6, devices belonging to the input/output target device group 5, and other external devices. In this case, data which describes the contents of the discrimination process may further include, for example, data specifying an acquisition source for data to be used in discrimination.

In the "discrimination process", predetermined data may be output to a predetermined output destination prior to discrimination (in which case, a symbol indicating the process is, for example, QBxx). For example, sending data representing a predetermined inquiry to the speech synthesis processing unit 3 prior to discrimination, or the like is possible. In a case where predetermined data predetermined data is output in the discrimination process prior to discrimination, data which describes the contents of the discrimination process includes, for example, the contents of data to be output and data designating the output destination of the data.

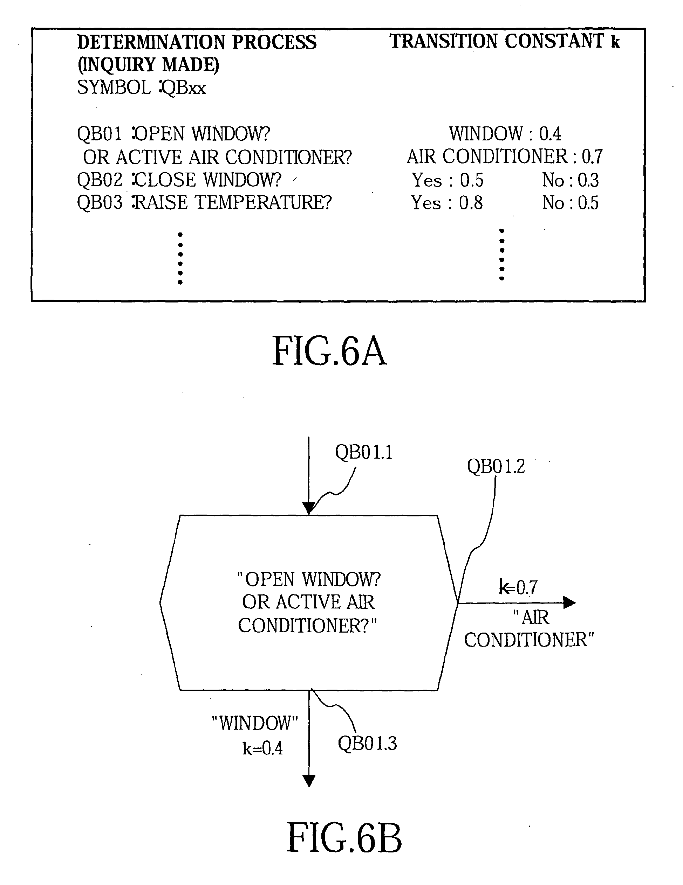

FIG 6A shows an example of a discrimination process QBxx. In this example, a discrimination process QB01, for example, asks a user "Open a window? Or activate the air conditioner?", and the transition constant k in the progress direction when the response (the user's answer) is "Activate the air conditioner" is 0.7, and the transition constant k in the progress direction when the response is "open a window" is 0.4. FIG. 6B illustrates a flowchart for this example. A node QB01.1 shown in FIG. 6B is a start node indicating the start point of the process, a node QB01.2 is a node in the progress direction when it is discriminated that activation of the "air conditioner" is designated in response to the inquiry, and the transition constant k is 0.7. Further, a node QB01.3 is a node in the progress direction when it is discriminated that opening a window is designated, and the transition constant k is 0.4. A discrimination process QB02 asks the user "Close a window?", the transition constant k in the progress direction when the response (the user's answer) is "Close" is 0.5, and the transition constant k in the progress direction when the response is "Do not close" is 0.3.

Data describing the contents of an "input/output process" stored in the process item database D4 comprises data which designates the contents of data to be input or output. Input data and output data may have arbitrary contents. For example, output data may be data representing reading of a speech which is generated by the speech output unit 4 via the speech synthesis processing unit 3 or a control signal which controls an external device. Input data may be, for example, data to be supplied from an external device.

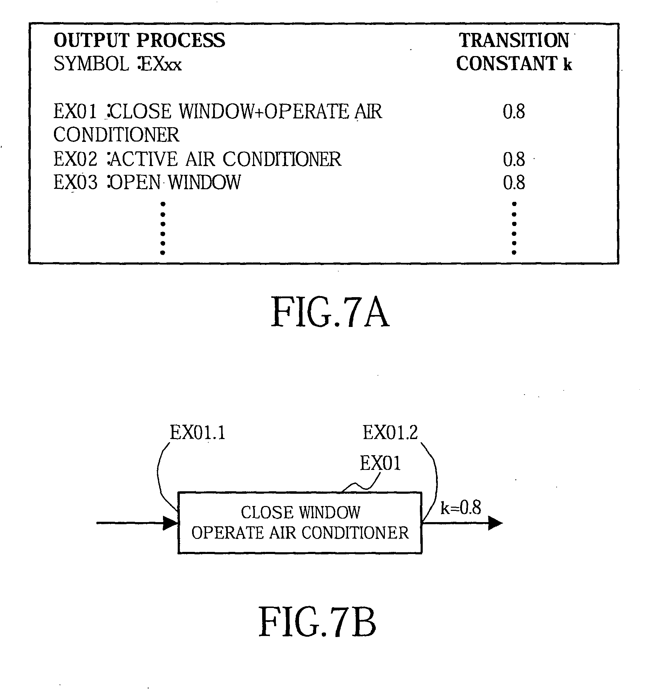

FIG. 7A shows an example of an input/output process EXxx. In this example, an output process EX01, for example, is an operation to "Close a window, and activate the air conditioner", and the transition constant k in the progress direction of executing a process after activation is 0.8. FIG. 7B illustrates a flowchart for this example. A node EX01.1 shown in FIG. 7B is a start node indicating the start point of the process, a node EX01.2 is a node indicating the end of the process, and the weighting factor k is 0.8. With regard to an output process EXxx, selection of a node indicating the end of the process without performing, for example, setting of a transition constant k may be a necessary process.

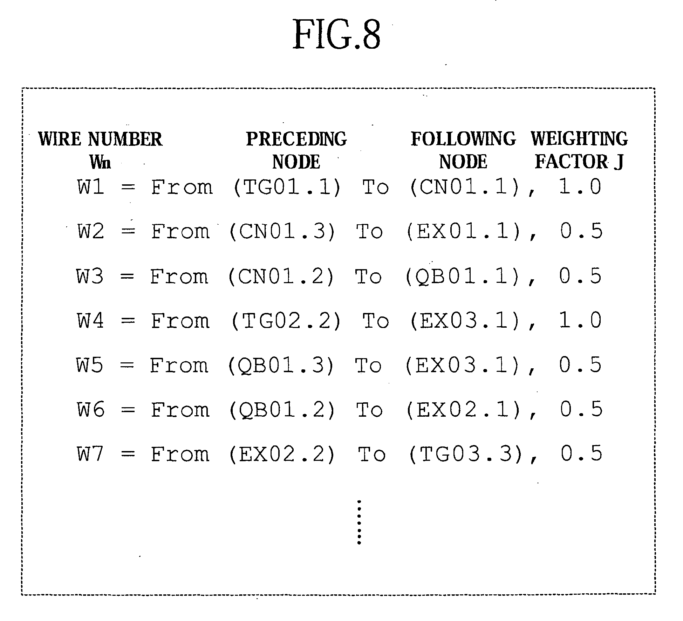

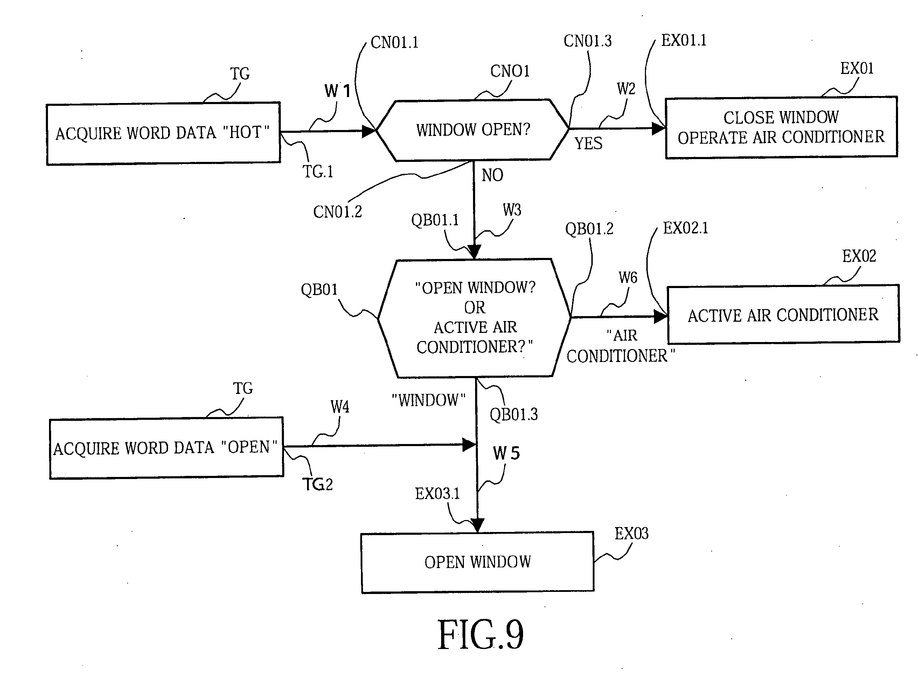

The wire database D5 comprises a set of data describing transitions among a plurality of processes (TG, CNxx, QBxx, EXxx) (the transition definition data will be hereinafter called wires). A wire comprises data described in, for example, a format illustrated in FIG. 8. As illustrated, a wire Wn (W1, W2...) is data which designates a preceding process (X), a following process (Y), and a weighting factor J given to transition, for the transition (From (X) To (Y)) from the preceding process X (From (X)) to the following process Y (To(Y)). When the preceding process X is a discrimination process, it is necessary to describe transition from what discrimination result of the discrimination process.
A transition causing process X and a transition target Y are specified by the node number of each process. The weighting factor J of each wire is not a fixed value, but is appropriately calculated and set according to the progress of a process. Calculation of the weighting factor J of the wire will be discussed later with reference to FIG. 9.

A flow generally represented by the process item database D4 and the wire database D5 is executed. The process item database D4 and the wire database D5 can describe a flow illustrated in FIG. 9 as a whole based on examples of FIGS. 3 to 7.

In the flow illustrated in FIG. 9, the agent processing unit 6 stands by for word data representing a word "hot" to be supplied from the language analyzer 2 in trigger process step TG01. When the word data representing the word "hot" is supplied, this data is acquired, and when it is discriminated that an input speech is "hot", that data is passed to discrimination process step CN01 (wire W1). A discrimination result of speech recognition may be improved with the score S of the word data representing the word "hot" and the aforementioned weighting factor J, which will be discussed later.

In the discrimination process step CN01, the agent processing unit 6 acquires information representing whether or not a window is open from a window opening/closing controller 52, and a process proceeds to input/output process step EX01 when having discriminated that it is open (wire W2), and in the input/output process step EX01, a control signal to instruct closing of the window is output to the window opening/closing controller 52, and a control signal to instruct starting of the cooling operation is output to the air conditioner 51. As a result, the window opening/closing controller 52 closes the window, and the air conditioner 51 starts the cooling operation.

When it is discriminated in the discrimination process step CN01 that the window is closed, a process proceeds to a discrimination process QB01 including an inquiry (wire W3). In the discrimination process step QB01, first, the agent processing unit 6 supplies the speech synthesis processing unit 3 with data representing a text "Open a window? Or Turn on the air conditioner?". The speech synthesis processing unit 3 reproduces a speech which reads out the text through the speech output unit 4.

In the discrimination process step QB01, next, the agent processing unit 6 stands by for word data representing a word "window" or words "air conditioner" to be supplied from the language analyzer 2, and when corresponding word data is supplied, it is discriminated whether the word data represents the word "window" or the words "air conditioner". When it is discriminated that the data represents the word "window", the process proceeds to input/output process step EX03 (wire W5), and when it is discriminated that the data represents the words "air conditioner", the process proceeds to input/output process step EX02 (wire 06).

The agent processing unit 6 outputs a control signal instructing start of cooling to the air conditioner 51 in the input/output process step EX02. The agent processing unit 6 outputs a control signal instructing opening of the window for ventilation to the window opening/closing controller 52 in the input/output process step EX03.

The agent processing unit 6 stands by for word data representing words "open a window" to be supplied from the language analyzer 2 (trigger process step TG02), and shifts the process to the input/output process step EX03 when the word data representing the words "open a window" is supplied and when it is determined that an input speeches is words "open a window" (wire W4).

In a case where the language analyzer 2 supplies plural pieces of word data, for example, the agent processing unit 6 executes a plurality of discrimination processes in parallel. In this case, if there are a plurality of processes involving the same word as an input target (for example, data input in a trigger acquisition process or a discrimination process) and word data representing the corresponding word is supplied from the language analyzer 2, the agent processing unit 6 executes all of those processes in parallel. At this time, fmal discrimination that what word is input can be performed with the score S and weighting factor J indicated by the word data, which will be discussed later.

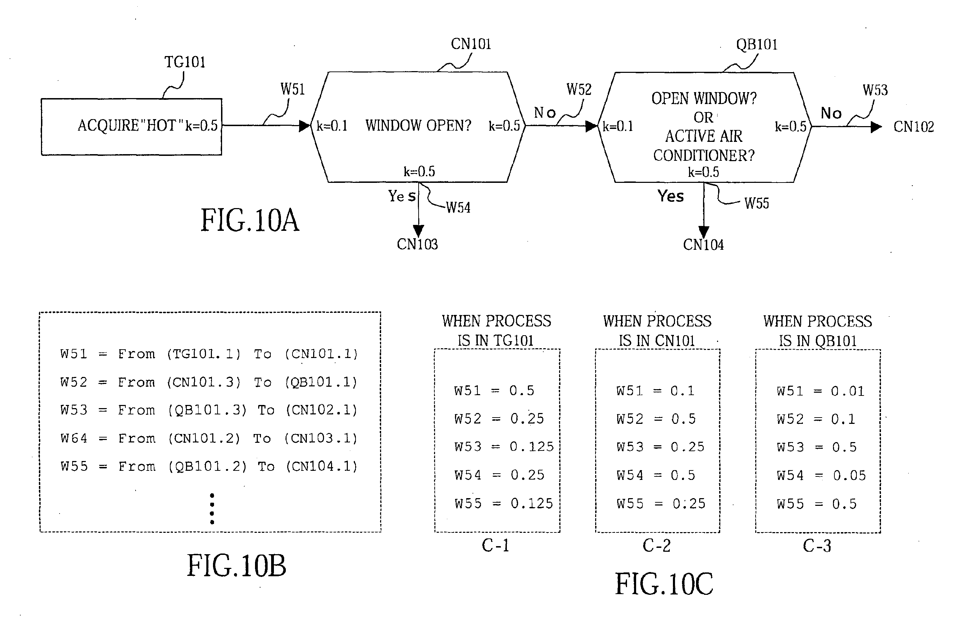

Next, a method of calculating the weighting factors J of the individual wires will be explained.
In a case where a plurality of process are linked together by wires W, the weighting factor J of a wire W of interest is obtained by sequentially multiplying transition constants k for progress direction determination over a transition path originating from a process currently in process to the wire W of interest.
To facilitate understanding, let us assume a process whose flow is shown in FIG 10A.
In this example, a wire W51 defines in such a way that a first preceding process (in this example, a trigger acquisition process TGxx) is executed and is transitioned to a following second process (in this example, a discrimination process CNxx), a wire W52 defines in such a way that the second process is executed and is transitioned to a following third process (in the example, QBxx), and a wire W53 defines in such a way that the third process is executed and is transitioned to a following process. A transition constant k for determining the progress direction of each of the first to third process is all 0.5.
In this case, the wires are defined as shown in, for example, FIG 10B.

For example, when the process (or control) of the agent processing unit 6 reaches the first process, the agent processing unit 6 calculates the individual weighting factors J of wires W51 to W55 (all including non-illustrated wires if they are present) by sequentially multiplying transition constants k in the preceding direction over a transition path with the first process being a starting point, writes calculation results in the wire database D5 in association with the wires W51 to W55.

Specifically, when the first process is reached, the weighting factor J of the wire W51, for example, becomes the value of a transition constant k allocated to a node linked to the second process of the first process, i.e., 0.5. The weighting factor J of the wire W52 in the second process becomes equal to a result of multiplying a transition constant k = 0.5 associated with the wire W51 in the first process by a transition constant k = 0.5 allocated to a node linked to the wire W52 in the second process, i.e., 0.25.
The weighing factor J of the wire W53 becomes equal to a result of further multiplying a result of multiplication of the transition constant k = 0.5 allocated to the node linked to the wire 51 in the first process by the transition constant k = 0.5 allocated to the node linked to the wire W52 in the second process by a transition constant k = 0.5 allocated to a node linked to the wire W53, i.e., 0.125.

The weighing factors J of the individual wires with processes in progress being starting points are calculated in this manner. Accordingly, as a current status is transitioned, the weighing factors J of the individual wires are calculated on a case-by-case basis with a current process being a starting point.

Specifically, as the current status is transitioned to the second process, the weighting factor J of the wire W54 becomes a value 0.5 equal to the transition constant k of the wire W52 of the second process, and the weighting factor J of the wire W55 becomes equal to a result of multiplying the transition constant k =0.5 of the wire W52 of the second process by a transition constant k =0.5 of the wire W55 of the third process, i.e., 0.25. At this time, the agent processing unit 6 calculates the weighing factor J of the wire W51 in the reverse direction, i.e., the direction of returning to the first process, and writes it in the database. When transition to the second process is executed, if the transition constant k in a reverse direction of the wire W51 is 0.1, 0.1 directly becomes the weighting factor J of the wire W51. When transition to the third process is executed, the transition constant k = 0.1 in the reverse direction of the wire W52 further becomes the weighting factor J of the wire W52, directly. The weighting factor J of the wire W51 in a status transitioned to the third process becomes a value obtained by multiplying the weighing factor J (= transition constant k) 0.1 of the wire W52 in a status transitioned to the third process by a transition constant k= 0.1 in the reverse direction of the second process, i.e., 0.01.
Changes in the weighting factors J of the individual wires Wn are illustrated in FIG. 10C.

Calculations of the weighting factors J are carried out not only for processes of the associated flow, but for all wires of the entire flows, and the calculated weighting factors J are set to the individual wires. A wire which is not associated with a current process may be allocated with a predetermined small coefficient. However, for a wire whose preceding process is a trigger acquisition process in particular, the transition constant k is set high to some extent. This ensures a jump to a conversation whose contents greatly differ from the contents of a conversation that has been made just before.
Conditions are set to the individual wires. Specifically, a word "hot" is set to W01 as a condition, and a word "window" is set to W05. When word data is supplied from the language analyzer 2, if the word data indicates the word "hot", a score S indicated by that word data is set to W01. If the word data supplied from the language analyzer 2 indicates the word "window", a score S indicated by that word data is set to W05.
The condition set to each wire is not limited to a case where a single word is set. For example, a plurality of words representing the same meaning may be set as conditions. Storing relationships among those words and the wires satisfies the setting of those conditions, and a word subject to score calculation is stored in the word database.
For example, when speech recognition is performed, the language analyzer 2 calculates the scores S of all words registered in the word database for input speech, generates word data, and outputs the word data to the agent processing unit 6. Next, the agent processing unit 6 discriminates with which wire each of the input word data is associated, and sets a score S indicated by the word data to each of the related wires. This enables calculation of scores S of the input speech signal and word at one time even if the same word is set to a plurality of wires as a condition. The obtained scores S of the individual words are set to the individual associated wires. Plural scores may be obtained for a single wire, but in this case, for example, the largest score S may be selected.
Accordingly, if individual words all representing the same meaning, such as "yes", "sure", "right", and the like are set to a single wire, an appropriate result as the score of speech recognition can be gained even if the user gives an instruction in any one of speeches "yes", "sure", and "right".
In some discrimination processes, information from the input/output target group 5 may be obtained as input information. In this case, data indicating the status of the individual devices of the input/output target group 5 is managed as a status database (corresponding to the aforementioned "word database"), and it is determined what status and which device the input information indicates by referring to the status database, and that and a score S are output to the agent processing unit 6 as status data. Unlike in the case of speech recognition, if a corresponding status is in the status database, a score S always becomes 100%. The agent processing unit 6 determines a wire relating to a status indicated by the status data, and sets a score S to each wire.

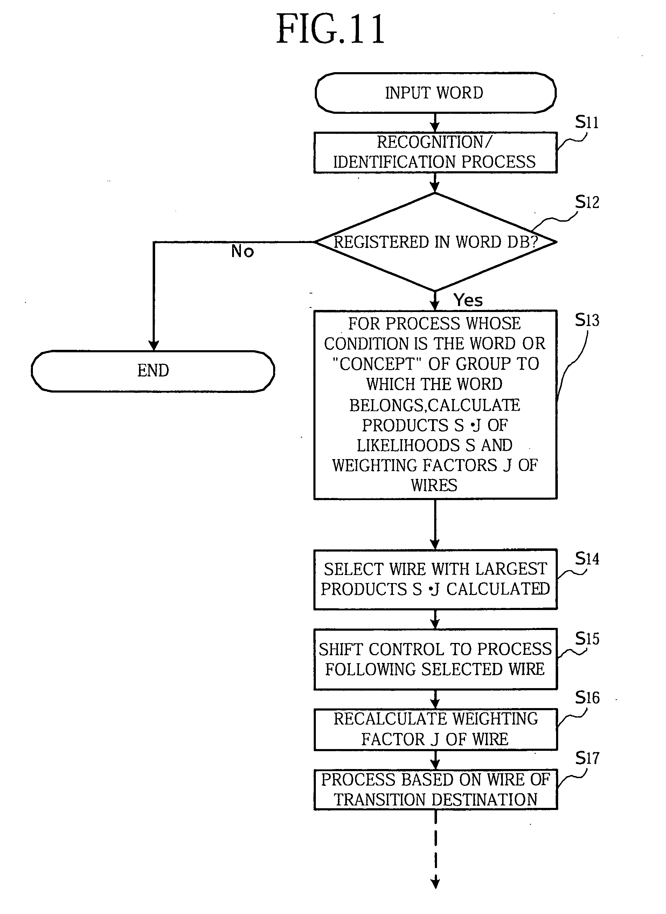

Next, the operation of the entire system structured in this manner will be explained with reference to FIG. 11.
The speech input unit 1 and the language analyzer 2 individually operate, capture a speech, analyze it, and provide the agent processing unit 6 with word data.
When (one or plural pieces of) word data associated with discrimination conditions are supplied from the language analyzer 2, the agent processing unit 6 executes the following processes.
A supplied word is recognized (identified) (step S11), and it is discriminated whether or not the word corresponds to a word registered in the word database D4 (step S12). If it is not registered (step S12, No), a word inputting process is terminated.
If it is registered (step S12, Yes), on the other hand, the product of the likelihood S of the word and the weighting factor J of the wire is calculated with respect to a process whose condition is the "concept" of the word or the group to which the word belongs (step S13).
For example, suppose that the process pointer PP indicates the first process in a case where the flow illustrated in FIG. 10A is being executed. The weighting factors J of the individual wires in this case are as illustrated in FIG. 10C.
Suppose that in this status, word data indicating a word "hot" with a score of 80% and a word "window" with a score of 50% is input.
In the example illustrated in FIGS. 10A and B, the word "hot" relates to a discrimination condition in the first process, and the word "window" relates to a discrimination condition in the third process.
As illustrated in FIG. 10(c-1), the weighting factor J of the wire W51 whose preceding process is a process of inputting the word data indicating the word "hot" is 0.5, and the weighting factor J of the wire W53 whose preceding process is a process of inputting the word data indicating the word "window" is 0.125. In this case, the products of the likelihoods S determined for the wires W51 and W53 and the weighting factors J are as indicated by equations 1 and 2.

(Equation 1) Product S.J regarding wire W51: score S (=80%) for "hot" × weighting factor J (= 0.5) of wire W51 = 40
(Equation 2) Product S.J regarding wire W53: score S (=50%) for "window" × weighting factor J (= 0.125) of wire W53 = 6.25

The agent processing unit 6 carries out the above-described processes of determining the products of scores S and weighting factors J for all the wires the flow has.
Subsequently, the agent controlling unit 6 selects wire with the largest calculated product S-J (step S14 in FIG. 11). The agent controlling unit 6 shifts control to a process following the selected wire (step S15). For example, when the product S.J acquired for the wire W51 represents the most largest value, the input data is recognized as representing the word "hot", and transition takes place to the second process which is the process following the wire W51. Normally, with a process currently in process being taken as a starting point, the weighting factor J of the wire is relatively large. Accordingly, the process generally shifts to the next process, but in a case where a word which quite differs from a previous one and has a large likelihood S is input, a process corresponding to that word may start.

When the process transitions, the agent processing unit 6 recalculates the weighting factors J of the individual wires based on the status after transition (step S16).
Afterward, the process is carried out in accordance with the contents of the process (step S17). In this example, the second process is executed. That is, the agent processing unit 6 acquires information on opening/closing of a window from the window opening/closing controller 52, determines the product S.J of the likelihood S for the wire W52 and the weighting factor J, determines the product S.J of the likelihood S for the wire W54 and the weighting factor J, selects any wire, and executes a process following the selected wire.
For a signal indicating opening/closing of the window from the window opening/closing controller 52, the likelihood of opening may be 100% or 0%, the likelihood of closing may be 0% or 100%. They may be changed in accordance with the level of opening. When there is an input/output process EXxx during the process and the agent processing unit 6 executes this process and outputs speech data, it is generated as a speech.
When a process of controlling the air conditioner and the window opening/closing controller 52, like an input/output process EX01, is executed during the process, the air conditioner 51 and the window opening/closing controller 52 are controlled in accordance with the contents of the process.

Although the discrimination process based on a "word" has mainly been explained referring to FIG. 8 and FIG. 9, the same is true of the discrimination process based on a concept as shown in FIG. 11. A wire from a trigger acquisition process based on a word or a concept is subject to discrimination. A somewhat large transition constant k may be set for transition from a trigger acquisition process. Specifically, a weighting factor 0.8 or the like is given to, for example, the wires in FIG 8, i.e., transitions from a trigger acquisition process TG02 of acquiring word data representing words "open a window" in the flow in FIG 9. Then, in a case where the process of the agent processing unit 6 is associated with a trigger acquisition process TG01, for example, as the user pronounces "open a window" and word data whose score for the words "open a window", for example, is 90% is obtained, the product S.J of the score S and the weighting factor J (= transition constant k) of the wire W5 associated with "determination on whether or not the user have said "Open a window"" is 90% x 0.8, i.e., 72. If the value is a large value that cannot be obtained by other wires, an input speech is recognized as "open a window", and the probability that the process of the agent processing unit 6 jumps to an input/output process EX03 becomes higher. If the weighting factors J of the other wires are set extremely small, the probability of occurrence of transitions defined by the other wires becomes extremely low, resulting in that the control process is carried out with a recognition rate being improved along the flow of a conversation expected to some extent.

In the embodiment, transition in the reverse direction may occur. However, it is often undesirable to reverse a conversation in practice. Accordingly, a reverse-direction transition constant k should be set to a smaller value than a preceding-direction transition constant k. Then, even if speech data with a high score S is obtained from an input speech, a product S.J acquired for a wire whose reverse-direction transition constant k is written as a weighting factor J becomes a small value, so that the possibility of transition in the reverse direction can be suppressed at low. The agent processing unit 6 may treat a process in which the value of the acquired product S.J does not meet a predetermined condition (a process in which the value of a product S.J does not reach a predetermined value) in such a way that the process is excluded from transition execution targets.

As illustrated in, for example, FIG 8, a wire defines transition in the form of from a process item to a process item. As a wire is described in the form as illustrated in FIG. 8 and stored in the wire database D5, it is possible to define relationships among the individual process items as if they were macro processes of a computer. This can facilitate connection of the individual process items.

Because a process item to be a trigger actually becomes discrimination of the score S of a word or the like to be recognized (may be an input from the other input target group) associated with a wire to be connected, a trigger process item in the wire is not defined as the starting point of the wire, but the wire itself is defined as the origin of transition.

Further, as the connection relationships among the individual process items are defined by wires, wires can be easily added. In a case where the user frequently inputs a speech "find a family restaurant" with an intention to take a rest after a speech "hot" is input, for example, a wire is automatically added with respect to the search process item of a family restaurant. Then, after the wire is automatically added, it becomes possible to appropriately cope with the input "find a family restaurant" by increasing the weighting factor J of a wire connected to a family restaurant search process item to some extent (in this case, however, the agent processing unit 6 shall store map data or the like including, for example, information representing the location of a family restaurant, or access external map data or the like).
The automatic addition of a wire may be automatically carried out when the number of jumps from one process item to another is counted and reaches a predetermined number.

If data and a wire representing the contents of a process are described appropriately, the above-described vehicular air conditioning system need not completely specify a device to be controlled and the contents of control to be added, but can respond to a language spoken by the user, assume the request of the user from the language, appropriately determine what control should be applied to which device, and apply control according to the result of the discrimination to a device.

The structure of the vehicular air conditioning system is not limited to the above-described one.
For example, devices belonging to the input/output target device group 5 should not necessarily be devices which bring about a result directly satisfying the user's demand, and may comprise, for example, a device (for example, a display apparatus like a liquid crystal display) that controls an external display apparatus or the like which outputs a message for prompting the user to take a specific action.

The word database may store not only data representing a word, but also data representing a phrase of plural words, as an element of the word database, or may store data representing a part of a word or a phoneme, as an element of the word database. A word or the like should not necessarily be grouped under a specific concept, and even in a case where grouping is done, data to be used for carrying out grouping may not take the form of a set of flags.

The agent processing unit 6 may change the transition constant k corresponding to a wire in accordance with a predetermined rule based on the number of times a transition represented by the wire has been executed, and rewrite the wire so that the weighting factor J becomes a calculated value based on the changed transition constant k.
Specifically, for example, the wire database stores the number of executions of a transition represented by each wire, with respect to that wire. The agent processing unit 6 rewrites the value of the number every time the transition is executed, thereby incrementing the value of the number by 1, and rewrites the transition constant k corresponding to each wire to a value which is proportional to, for example, the number stored for the wire. In the aforementioned embodiment, the condition set to the wire has been explained as to be set for each wire, but not limited to this. For example, the conditions of the individual wires may be described in the discrimination process. In this case, it is specified beforehand what wire each condition corresponds to.

The agent processing unit 6 may change data to be output in a discrimination process and an input/output process in accordance with data passed to those processes, data input through those processes, and other optional conditions.

The vehicular air conditioning system may have a display apparatus (for example, a liquid crystal display or the like) for outputting an image under the control of the agent processing unit 6, and the agent processing unit 6 may control the display apparatus in such a way that it displays a predetermined image for each process in the input/output process and the discrimination process.

The agent processing unit 6 may collectively acquire plural pieces of word data continuously spoken or the like in one input process and one discrimination process. The agent processing unit 6 may specify under what concept the plural pieces of word data collectively acquired are grouped to the same group, and use a part of or all of the acquired word data for use in a process only if the specified concept matches with the predetermined concept.

The agent processing unit 6 may comprise a plurality of data processing units (e.g., computers or the like) which are connected to one another and bear a flow formed generally by various processes, such as a trigger acquisition process, a discrimination process, and an input/output process, and wires. In this case, it is sufficient that each data processing unit which constitutes the agent processing unit 6 stores data representing that portion in the overall flow executable by the agent processing unit 6 which is probably executed by the unit, as elements of the process item database D4 or the wire database D5. If data to be stored by each data processing unit is such data which macro-defines that process which is executed by the data processing unit, it is easy to cause the plurality of data processing units to perform distributed processing.

The vehicular air conditioning system may plurally include the speech input unit 1, and the language analyzer 2 or the speech output unit 4.
The speech input unit 1 may have a recording medium drive unit (e.g., a floppy (registered trademark) disk drive, a CD-ROM drive or an MO drive) which reads a waveform signal from a recording medium (e.g., a floppy (registered trademark) disk, a CD (Compact Disc), an MO (Magneto-Optical Disk)) where data representing speeches is recorded, and supplies the signal to the language analyzer 2.

A device control device according to the invention whose embodiment has been explained above can be realized not only by an exclusive system but also an ordinary computer system.
For example, the vehicular air conditioning system that executes the above-described processes can be constructed by installing a program for executing the operations of the speech input unit 1, the language analyzer 2, the speech synthesis processing unit 3, the speech output unit 4 and the agent processing unit 6 into a personal computer connected to the input/output target device group 5 from a recording medium where the program is stored. The personal computer that executes the program executes flows shown in FIG. 9 as processes equivalent to the operation of the vehicular air conditioning system in FIG. 1.

The program that allows a personal computer to perform the functions of the vehicular air conditioning system may be uploaded to, for example, a bulletin board system (BBS) of a communication line, and distributed via the communication line, or a carrier may be modulated with a signal representing the program, the acquired modulated wave may be transmitted, and a device which receives the modulated wave demodulates the modulated wave to restore the program. Then, the above-described processes can be executed by invoking the program, and running the program like other application programs under the control of the OS.

When the OS bears a part of the processes, or the OS constitutes a part of a single constituting element of the invention, a program excluding that part may be stored in a recording medium. In this case, it is also assumed that according to the invention, a program for executing the individual functions or steps to be executed by the computer is stored in the recording medium.

### Industrial Applicability

The invention can be used for various device control devices or the like which can control a device adequately in response to an instruction uttered in the form of a language by a human being.

## Claims

1. A device control device comprising:
input information recognition means (2) which recognizes input information to be input;
process-item data storing means (D4) which stores a plurality of process items for executing processes corresponding to recognition information recognized by the input information recognition means (2); and
transition-definition data storing means (D5) which stores plural pieces of transition definition data defining transition from one process item in the plurality of process items to another process item, wherein
each piece of said transition definition data includes a condition corresponding to input information, and
a piece of transition definition data is selected from at least said recognition information and the conditions of the individual transition definition data, and a status is transitioned to a process item designated by the selected transition definition data.

2. The device control device according to claim 1, wherein said recognized information includes a likelihood (score) between input information and information to be compared, and
said piece of transition definition data is selected using said likelihood (score).

3. The device control device according to claim 1, wherein when a jump is made from a predetermined process item to a process item or transition definition data which is not defmed by transition defining data, transition definition data corresponding to the process item or transition definition data jumped from said predetermined process item is generated.

4. The device control device according to claim 1, wherein said input information is a speech signal, and
the condition of said transition definition data is a word associated with said transition definition data.

5. The device control device according to claim 1, wherein a plurality of conditions are set for said transition definition data.

6. A device control device that stores plural pieces of transition definition data which defines transition from one process item in process items for executing processes corresponding to input information to another process item, selects a piece of transition definition data in accordance with the input information, and transitions a status to a process item designated by the selected piece of transition definition data,
wherein said transition definition data includes:
a condition corresponding to the input information,
a weighting factor corresponding to said condition, and
constants each of which is a standard for calculating said weighting factor and set for said transition definition data, and
a weighting factor of transition definition data relating to another process item linked to one process item whose status is transitioned is calculated by accumulating said constants from the constant for transition definition data relating to one process item to the constant for transition definition data relating to the another process item.

7. A device control device comprising:
input information recognition means (2) which recognizes input information to be input;
process-item data storing means (D4) which stores a plurality of process items for executing processes corresponding to recognized information recognized by the input information recognition means (2); and
transition-definition data storing means (D5) which stores plural pieces of transition definition data defining transition from one process item in the plurality of process items to another process item, wherein
each piece of said transition definition data includes a condition corresponding to input information and a weighting factor corresponding to said condition,
said recognized information includes a likelihood (score) indicating a status of matching between said input information and the condition of said transition definition data,
said weighing factor is associated with a likelihood (score) corresponding to the condition of said transition definition data to obtain a result of discrimination for the condition of each transition definition data, and
a piece of transition definition data is selected based on said discrimination result, and a status is transitioned to a process item designated by the selected transition definition data.

8. The device control device according to claim 7, wherein when a jump is made from a predetermined process item to a process item or transition definition data which is not defined by transition defining data, transition definition data corresponding to the process item or transition definition data jumped from said predetermined process item is generated.

9. The device control device according to claim 7, wherein a transition constant which is a calculation standard for said weighting factor is set as a constant corresponding to said transition definition data, and
a weighting factor of transition definition data relating to another process item linked to one process item whose status is transitioned is calculated by accumulating said constants from the constant for transition definition data relating to one process item to the constant for transition definition data relating to the another process item.

10. The device control device according to claim 9, wherein said transition constant changes, provided that transition definition data relating to said transition constant is selected.

11. The device control device according to claim 7, wherein even when a status is transitioned to one process item, a weighting factor of transition definition data relating to a predetermined process item is set higher than a predetermined value.

12. The device control device according to claim 7, wherein said input information is a speech signal, and
the condition of said transition definition data is a word subject to speech recognition.

13. The device control device according to claim 7, wherein a plurality of conditions are set for a piece of transition definition data.

14. A device control device that has process-item data storing means (D4) which stores a plurality of process items for executing processes corresponding to recognized information obtained by recognizing input information,
defines transition from one process item in the plurality of process items to another process item by transition definition data, and
generates a flowchart of process items by adding or deleting said transition definition data in accordance with a link to a necessary process item.

15. The device control device according to claim 14, wherein said process-item data storing means (D4) is constituted in such a manner that a process item can be added adequately.

16. The device control device according to claim 14, wherein each piece of said transition definition data has a condition corresponding to input information.

17. The device control device according to claim 16, wherein said recognized information has a likelihood (score) indicating a status of matching between input information and the condition of said transition definition data, and
said likelihood corresponding to the condition of said transition definition data is set for said transition definition data.

18. The device control device according to claim 16, wherein said input information is a speech signal,
the condition of said transition definition data is a target word subject to speech recognition,
said recognized information includes a likelihood (score) indicating a status of matching between the speech signal and the target word of said transition definition data,
said likelihood (score) corresponding to the target word of said transition definition data is set in said transition definition data, and
a piece of said transition definition data is selected in accordance with said likelihood (score), and a state is transitioned to a process item represented by said selected piece of transition definition data.

19. The device control device according to claim 14, wherein said transition definition data includes
a condition corresponding to input information, and
a weighting factor corresponding to said condition.

20. The device control device according to claim 19, wherein a transition constant which is a calculation standard for said weighting factor is set as a constant corresponding to said transition definition data, and
a weighting factor of transition definition data relating to another process item linked to one process item whose status is transitioned is calculated by accumulating said constants from the constant for transition definition data relating to one process item to the constant for transition definition data relating to the another process item.

21. A speech recognition device comprising:
input information recognition means (2) which recognizes input information to be input;
process-item data storing means (D4) which stores a plurality of process items for executing processes corresponding to recognition information recognized by the input information recognition means (2); and
transition-definition data storing means (D5) which stores plural pieces of transition definition data defining transition from one process item in the plurality of process items to another process item, wherein
each piece of said transition definition data includes a condition corresponding to input information, and
a piece of transition definition data is selected from at least said recognition information and the conditions of the individual transition definition data, and a status is transitioned to a process item designated by the selected transition definition data.

22. A speech recognition device comprising a device control device (6) which stores plural pieces of transition definition data which defines transition from one process item in process items for executing processes corresponding to input information to another process item, selects a piece of transition definition data in accordance with the input information, and transitions a status to a process item designated by the selected piece of transition definition data,
wherein said transition definition data includes:
a condition corresponding to the input information,
a weighting factor corresponding to said condition, and
constants each of which is a standard for calculating said weighting factor and set for said transition definition data, and
a weighting factor of transition definition data relating to another process item linked to one process item whose status is transitioned is calculated by accumulating said constants from the constant for transition definition data relating to one process item to the constant for transition definition data relating to the another process item.

23. A speech recognition device comprising:
input information recognition means (2) which recognizes input information to be input;
process-item data storing means (D4) which stores a plurality of process items for executing processes corresponding to recognized information recognized by the input information recognition means (2); and
transition-definition data storing means (D5) which stores plural pieces of transition definition data defining transition from one process item in the plurality of process items to another process item, wherein
each piece of said transition definition data includes a condition corresponding to input information and a weighting factor corresponding to said condition,
said recognized information includes a likelihood (score) indicating a status of matching between said input information and the condition of said transition definition data,
said weighing factor is associated with a likelihood (score) corresponding to the condition of said transition definition data to obtain a result of discrimination for the condition of each transition definition data, and
a piece of transition definition data is selected based on said discrimination result, and a status is transitioned to a process item designated by the selected transition definition data.

24. A speech recognition device that has process-item data storing means (D4) which stores a plurality of process items for executing processes corresponding to recognized information obtained by recognizing input information,
defines transition from one process item in the plurality of process items to another process item by transition definition data, and
generates a flowchart of process items by adding or deleting said transition definition data in accordance with a link to a necessary process item.

25. An agent device comprising:
input information recognition means (2) which recognizes input information to be input;
process-item data storing means (D4) which stores a plurality of process items for executing processes corresponding to recognition information recognized by the input information recognition means (2); and
transition-definition data storing means (D5) which stores plural pieces of transition definition data defining transition from one process item in the plurality of process items to another process item, wherein
each piece of said transition definition data includes a condition corresponding to input information, and
a piece of transition definition data is selected from at least said recognition information and the conditions of the individual transition definition data, and a status is transitioned to a process item designated by the selected transition definition data.

26. An agent device comprising a device control device (6) which stores plural pieces of transition definition data which defines transition from one process item in process items for executing processes corresponding to input information to another process item, selects a piece of transition definition data in accordance with the input information, and transitions a status to a process item designated by the selected piece of transition definition data,
wherein said transition definition data includes:
a condition corresponding to the input information,
a weighting factor corresponding to said condition, and
constants each of which is a standard for calculating said weighting factor and set for said transition definition data, and
a weighting factor of transition definition data relating to another process item linked to one process item whose status is transitioned is calculated by accumulating said constants from the constant for transition definition data relating to one process item to the constant for transition definition data relating to the another process item.

27. An agent device comprising:
input information recognition means (6) which recognizes input information to be input;
process-item data storing means (D4) which stores a plurality of process items for executing processes corresponding to recognized information recognized by the input information recognition means (2); and
transition-definition data storing means (D5) which stores plural pieces of transition definition data defining transition from one process item in the plurality of process items to another process item, wherein
each piece of said transition definition data includes a condition corresponding to input information and a weighting factor corresponding to said condition,
said recognized information includes a likelihood (score) indicating a status of matching between said input information and the condition of said transition definition data,
said weighing factor is associated with a likelihood (score) corresponding to the condition of said transition definition data to obtain a result of discrimination for the condition of each transition definition data, and
a piece of transition definition data is selected based on said discrimination result, and a status is transitioned to a process item designated by the selected transition definition data.

28. An agent device that has process-item data storing means (D4) which stores a plurality of process items for executing processes corresponding to recognized information obtained by recognizing input information,
defines transition from one process item in the plurality of process items to another process item by transition definition data, and
generates a flowchart of process items by adding or deleting said transition definition data in accordance with a link to a necessary process item.

29. A data structure of transition definition data which defines transition from one process item of a plurality of process items, for executing processes corresponding to input information, to another process item, wherein
said transition definition data includes
a condition corresponding to input information, and
a weighting factor corresponding to said condition,
a transition constant which is a calculation standard for said weighting factor is set as a constant corresponding to said transition definition data, and
a weighting factor of transition definition data relating to another process item linked to one process item whose status is transitioned is calculated by accumulating said constants from the constant for transition definition data relating to one process item to the constant for transition definition data relating to the another process item.

30. The data structure according to claim 29, wherein said input information is a speech signal, and
the condition corresponding to said input information is a target word for voice recognition.

31. A device control method of a device (2, 6) which stores a plurality of process items for executing processes corresponding to recognized information recognized by input information recognition means (2), and stores plural pieces of transition definition data defining transition from one process item in the plurality of process items to another process item, comprising:
an input information recognition step of recognizing input information to be input;
a step of selecting a piece of transition definition data from at least recognized information recognized at said input information recognition step, and a condition set in accordance with said transition definition step; and
a step of transitioning a status to a process item designated by the selected transition definition data.

32. A device control method comprising:
an input information recognition step of recognizing input information to be input;
a step of specifying a likelihood (score), which indicates a status of matching between a condition associated with transition definition data defining transition from one process item in a plurality of process items to another process item and said input information, from recognized information recognized at said input information recognition step;
a step of obtaining a discrimination result by relating a weighting factor associated with said transition definition data to said likelihood (score);
a step of selecting a piece of transition definition data based on said discrimination result; and
a step of transitioning a status to a process item designated by the selected transition definition data.

33. A device control method comprising:
process-item data storing step of storing a plurality of process items for executing processes corresponding to input information;
a step of defining transition from one process item in a plurality of process items to another process item by transition definition data, and generating a flowchart of process items by adding or deleting said transition process data in accordance with a link of a necessary process item.
